# EUROPÄISCHE PATENTSCHRIFT

(11) **EP 3 663 138 B1**
(45) Veröffentlichungstag und Bekanntmachung des Hinweises auf die Patenterteilung: **09.02.2022**
(21) Anmeldenummer: 19213490.6
(22) Anmeldetag: 04.12.2019
(51) Int. Cl.: B60R 21/201, B60R 21/213, B60R 21/232

(54) **BEFESTIGUNGSELEMENT ZUR FAHRZEUGSEITIGEN MONTAGE EINES GASSACKMODULS**
FASTENING ELEMENT FOR THE VEHICLE-SIDE MOUNTING OF AN AIRBAG MODULE
ÉLÉMENT DE FIXATION À MONTER SUR UN VÉHICULE D'UN MODULE DE SAC GONFLABLE

(30) Priorität: 07.12.2018 DE 202018106999 U
(43) Veröffentlichungstag der Anmeldung: 10.06.2020
(73) Patentinhaber: Dalphi Metal España, S.A., 36213 Vigo (ES)
(72) Erfinder: Abelenda Alcalde, María del Pilar, 36210 Vigo (ES); Areán Buján, José Manuel, 36215 Vigo (ES); Santín Navarro, Pedro José, 36204 Vigo (ES); Schneeweiss, Philippe, 36350 Nigrán (ES)
(74) Vertreter: ZF Patentabteilung - DIPS

(56) Entgegenhaltungen:
- EP-A2- 1 764 271
- US-A1- 2003 222 435
- US-B1- 9 321 417

## Beschreibung

Die vorliegende Erfindung betrifft ein Befestigungselement zur Befestigung eines Gassackmoduls an einem Fahrzeug. Des Weiteren betrifft die Erfindung ein Gassackmodul mit einem solchen Befestigungselement sowie ein Fahrzeuginsassenrückhaltesystem.

Ein Fahrzeuginsassenrückhaltesystem kann bekanntermaßen einen aufblasbaren Gassack, wie zum Beispiel einen Front- oder Rückscheibenairbag, oder einen Seitenairbag, der beispielsweise als Thoraxairbag und/oder als Vorhangairbag bzw. als Curtain-Airbag ausgebildet sein kann, und einen Gasgenerator zum Aufblasen des Gassackes im Aktivierungsfall umfassen. Derartige Airbags verhindern insbesondere bei einem Front-, Heck-, oder Seitenaufprall eine Verletzung des Fahrzeuginsassen am Schulter- bzw. Kopfbereich.

Üblicherweise ist der aufgerollte oder anderswie gefaltete Gassack über Befestigungsabschnitte beispielsweise an der Fahrzeugkarosserie im Fahrzeuginnenraum, bei einem Vorhangairbag insbesondere oberhalb der Fensterausschnitte befestigt, sodass sich der gerollte oder gefaltete Gassack im Aktivierungsfall schützend z. B. vor die Front-, Heck-, oder Seitenfensterausschnitte ausbreiten kann. Zur fahrzeugseitigen Befestigung sind eine oder mehrere Befestigungsanordnungen vorgesehen, welche die vorhandenen Haltelaschen des Gassackes an der Fahrzeugkarosserie befestigen.

Beispielsweise aus der Druckschrift US 6 279 941 B1 ist ein Kopfairbagmodul zum Befestigen an einer Fahrzeugkarosserie bekannt. Das Kopfairbagmodul umfasst einen aufblasbaren Gassack, der entlang eines seitlichen Abschnittes im Fahrzeuginnenraum befestigt wird. Hierzu weist er mehrere Befestigungsabschnitte auf. Die Befestigungsabschnitte werden jeweils durch ein Paar Befestigungsplatten gebildet, zwischen denen jeweils eine Haltelasch des Gassackes fahrzeugseitig befestigt wird. Die korrespondierenden Befestigungsplatten werden an der Fahrzeugkarosserie verschraubt. Die der Fahrzeugkarosserie zugewandte Befestigungsplatte weist senkrecht von der Befestigungsplatte vorstehende Rastelemente auf, die von der Fahrzeugkarosserie aufgenommen werden, sodass eine Verdrehung der Befestigungsplatte beim fahrzeugseitigen Verschrauben entgegengewirkt wird.

Weiterhin sind aus der EP 1 764 271 A2, der US 2003 / 222 435 A1 und der US 9 321 417 B1 verschiedene Ausführungsformen von Befestigungselementen bekannt, die einen Forstsatz aufweisen, der in dem am Fahrzeug montierten Zustand des Gassackmoduls in den Gassack oder in ein den Gassack in seiner Faltung bewahrendes Halteelement eingreifen. Die EP 1 764 271 A2 offenbart ein Befestigungselement nach dem Oberbegriff von Anspruch 1.

Im Aktivierungsfall ist zumindest theoretisch denkbar, dass der Gassack sich aufgrund von in ihn einströmendem Gas noch vor seiner Ausbreitung nach unten entgegen seiner Roll- bzw. Faltrichtung in Umfangsrichtung um seine Längserstreckung verdreht.

Der vorliegenden Erfindung liegt daher die Aufgabe zugrunde, ein Befestigungselement und ein Gassackmodul mit einem solchen Befestigungselement sowie ein Fahrzeuginsassenrückhaltesystem vorzuschlagen, mit der einem unerwünschten Verdrehen des aufgerollten bzw. gefalteten Gassackes entgegengewirkt wird.

Diese Aufgabe wir erfindungsgemäß im Hinblick auf ein Befestigungselement durch die Merkmale des Patentanspruches 1, im Hinblick auf ein Gassackmodul durch die Merkmale des Patentanspruchs 7 und im Hinblick auf ein Fahrzeuginsassenrückhaltesystem durch die Merkmale des Patentanspruchs 9 gelöst.

Erfindungsgemäß wird also ein Befestigungselement zur fahrzeugseitigen Montage eines Gassackmoduls geschaffen mit zumindest einer fahrzeugseitig befestigbaren Befestigungsplatte, die in ihrer Plattenebene verdrehsicher mit einem Gassack koppelbar ist.

Die Befestigungsplatte weist einen Fortsatz auf, über den das Befestigungselement quer zu der Plattenebene verdrehsicher an dem Gassack oder an einem, diesen in seiner Faltung bewarenden Halteelement fixierbar ist.

Auf diese Weise wird eine fahrzeugseitige Montage des Gassackmoduls über das erfindungsgemäße Befestigungselemnt als speziell ausgeführte Befestigungsplatte ermöglicht, bei der ein Verdrehen des aufgerollten Gassackes insbesondere in Umfangsrichtung verhindert wird. Demzufolge ist eine festgelegte Austrittsrichtung des Gassackes sichergestellt, sodass sich der Gassack im Aktivierungsfall korrekt während des Aufblasens positioniert.

Erfindungsgemäß weist der Fortsatz zumindest einen Hinterschnitt auf, welcher an einer Ausnehmung des Gassackes oder des Halteelementes fixierbar ist.

Somit kann der Fortsatz montagefreundlich am Gassack, bzw. an einem Montageschlauch oder anderem Funktionselement des Gassackmoduls verhakt werden, ohne dass eine Trennung im Auslösefall zu befürchten wäre.

Dadurch, dass der vorgesehene längliche Fortsatz vorteilhafter Weise an der Befestigungsplatte in Plattenebene ausgerichtet ist und gassackseitig, insbesondere Montageschlauchseitig fixierbar ist, wird ein beim Aufblasen des Gassackes auftretendes Drehmoment über den Fortsatz ausreichend abgestützt. Hierbei ist die konkrete konstruktive Ausgestaltung des Fortsatzes auf verschiedene Arten möglich, wenn der Fortsatz einen ausreichenden Hebelarm bezogen auf die Verschraubung bildet.

Eine besonders vorteilhafte Ausführung der Erfindung sieht vor, dass der Fortsatz in einer Ausnehmung oder dergleichen eines den Gassack aufnehmenden Montageschlauches oder dergleichen fixierbar ist. Die Fixierung des Fortsatzes ist durch das erfindungsgemäße Vorsehen von Hinterschnitten an einem Endabschnitt des Fortsatzes eine besonders montagefreundliche Ausführung.

Um eine besonders mechanisch stabile Gestaltung der Befestigungsplatte zu realisieren, kann der Fortsatz beispielsweise durch symmetrisch zur Längserstreckung bzw. zur Längsachse der Befestigungsplatte ausgerichtete Armabschnitte gebildet werden, die einen gemeinsamen Endabschnitt bilden. Durch die symmetrische Ausführung kann eine optimale Kraftübertragung an der Befestigungsplatte realisiert werden.

Ein weiterer Vorteil ergibt sich bei dem über Armabschnitte gebildeten Fortsatz dadurch, dass zwischen den Armabschnitten eine Aussparung oder dergleichen vorgesehen sein kann, um auf diese Weise das Gewicht der Befestigungsplatte und damit der gesamten Befestigungsanordnung zu reduzieren.

Die konstruktive Ausführung des Endabschnittes des erfindungsgemäß mit zumindest einen Hinterschnitt ausgebildeten Fortsatzes ist grundsätzlich frei wählbar, wenn sichergestellt ist, dass eine ausreichend sichere Fixierung des Fortsatzes gewährleistet ist. Eine besonders vorteilhafte Ausführung wird dadurch realisiert, dass der gemeinsame Endabschnitt der Armabschnitte halbkreisförmig mit beidseitig vorgesehenen Hinterschnitten oder dergleichen ausgeführt sein kann. Auf diese Weise bildet der Endabschnitt einen Halteanker, der auf effektive aber zuverlässige Weise an dem Montageschlauch des Gassackes fixierbar ist.

Es ist ferner bevorzugt, dass die Befestigungsplatte eine zentrale Öffnung, insbesondere eine Verschraubungsbohrung oder eine Clipaufnahmeöffnung, zur fahrzeugseitigen Befestigung aufweist, wobei vorzugsweise beidseitig neben der zentralen Öffnung quer zur Längsachse der Befestigungsplatte, weiter vorzugsweise jeweils etwa senkrecht zur Plattenebene ausgerichtete, Haltekrallen zur fahrzeugseitigen Befestigung angeformt sind.

Hierdurch wird eine zuverlässige Anbindung des Gassackmoduls an das Fahrzeug ermöglicht.

Über die erfindungsgemäß vorgeschlagene Befestigung kann als Gassack vorzugsweise ein Seitenairbag, insbesondere ein Vorhangairbag fahrzeugseitig montiert werden. Ein nebengeordneter Aspekt der vorliegenden Erfindung schafft ein Gassackmodul mit einem Gassack, einem Gasgenerator zum Bereitstellen von Aufblasgas für den Gassack und zumindest einem Befestigungselement, wie zuvor beschrieben.

Ein nächster nebengeordneter Aspekt der vorliegenden Erfindung beruht darauf, ein Fahrzeuginsassenrückhaltesystem mit dem beanspruchten Befestigungselement bzw. mit dem beanspruchten Gassackmodul sowie mit einer Sensoreinheit zum Erfassen von Umständen, die einen Aktivierungsfall des Gasgenerators auslösen, und mit einer elektronischen Recheneinheit zum Definieren des Aktivierungsfalles auf Basis der von der Sensoreinheit erfassten Umstände bereitzustellen, wodurch sich die bereits beschriebenen und weitere Vorteile ergeben.

Weitere vorteilhafte und beanspruchte Weiterbildungen ergeben sich aus den Unteransprüchen und der Beschreibung sowie der Zeichnung.

Nachfolgend wird die vorliegende Erfindung anhand der Zeichnungen weiter erläutert. Es zeigen:
- Figur 1 eine dreidimensionale Ansicht eines erfindungsgemäßen Befestigungselementes mit einer z. B. einer ersten Befestigungsplatte;
- Figur 2 eine Draufsicht auf die Befestigungsplatte gemäß Figur 1;
- Figur 3 eine Vorderansicht der Befestigungsplatte gemäß Figur 1 und 2;
- Figur 4 eine dreidimensionale Ansicht einer erfindungsgemäßen Befestigungsanordnung zur fahrzeugseitigen Montage einer Haltelaschen eines in einem Montageschlauch befindlichen Gassackes;
- Figur 5 eine weitere Ansicht der Befestigungsanordnung gemäß Figur 4 und;
- Figur 6 eine Seitenansicht der Befestigungsanordnung.

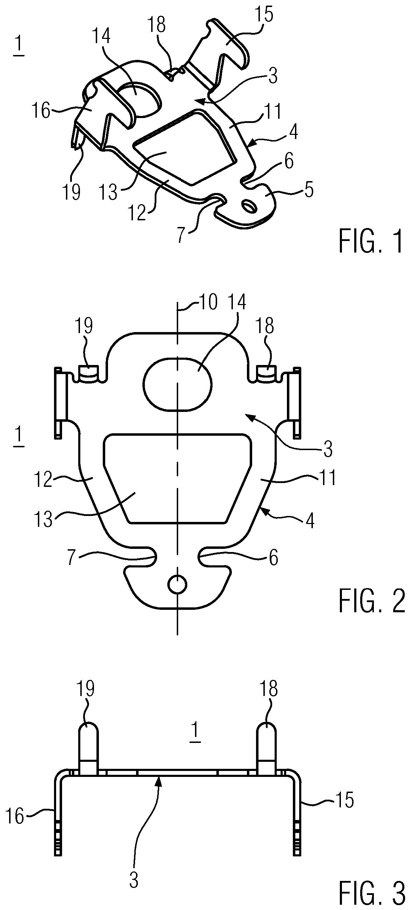

In den Figuren 1 bis 3 sind verschiedene Ansichten eines erfindungsgemäßen Befestigungselementes 1 zur fahrzeugseitigen Montage zumindest einer Haltelasche 21 eines aufblasbaren Gassackes 2 für ein Fahrzeuginsassenrückhaltesystem beispielhaft dargestellt.

Das Befestigungselement 1 ist als fahrzeugseitig anschraubbare Befestigungsplatte 3 ausgeführt. Um ein unerwünschtes Verdrehen des Gassackes 2, insbesondere beim anfänglichen Einströmen des von einem Gasgenerator zur Verfügung gestellten Aufblasgases in den Gassack 2 zu verhindern, ist vorgesehen, dass die Befestigungsplatte 3 in Plattenebene einen länglichen Fortsatz 4 als Verdrehsicherung aufweist, dessen Endabschnitt 5 gassackseitig fixierbar ist. Der Fortsatz 4 umfasst zwei symmetrisch zur einer Längsachse bzw. Längserstreckung 10 der Befestigungsplatte 3 ausgerichtete Armabschnitte 11, 12, die gemeinsam den Endabschnitt 5 bilden.

Insbesondere aus den Figuren 1 und 2 ist ersichtlich, dass der Fortsatz 4 zwei Hinterschnitte 6, 7 an seinem Endabschnitt 5 aufweist, die an einer Ausnehmung 8 eines dem Gassack 2 aufnehmenden Montageschlauches 9 fixierbar sind. Die beiden Hinterschnitte 6, 7 sind symmetrisch zur Längsachse 10 der Befestigungsplatte 3 angeordnet. Der Endabschnitt 5 ist halbkreisförmig mit den beidseitig vorgesehenen Hinterschnitten 6, 7 ausgeführt. Der Fortsatz 4 weist zwischen den Armabschnitte 6, 7 eine gewichtsreduzierende Aussparung 13 auf.

Die Befestigungsplatte 3 kann eine zentrale Verschraubungsbohrung 14 zur fahrzeugseitigen Befestigung aufweisen. Beidseitig neben der Verschraubungsbohrung 40 sind quer zur Längsachse 10 jeweils etwa senkrecht zur Plattenebene ausgerichtete Haltekrallen 15, 16 angeformt, die zur Verdrehsicherung in Halteausnehmungen der Fahrzeugkarosserie eingreifen.

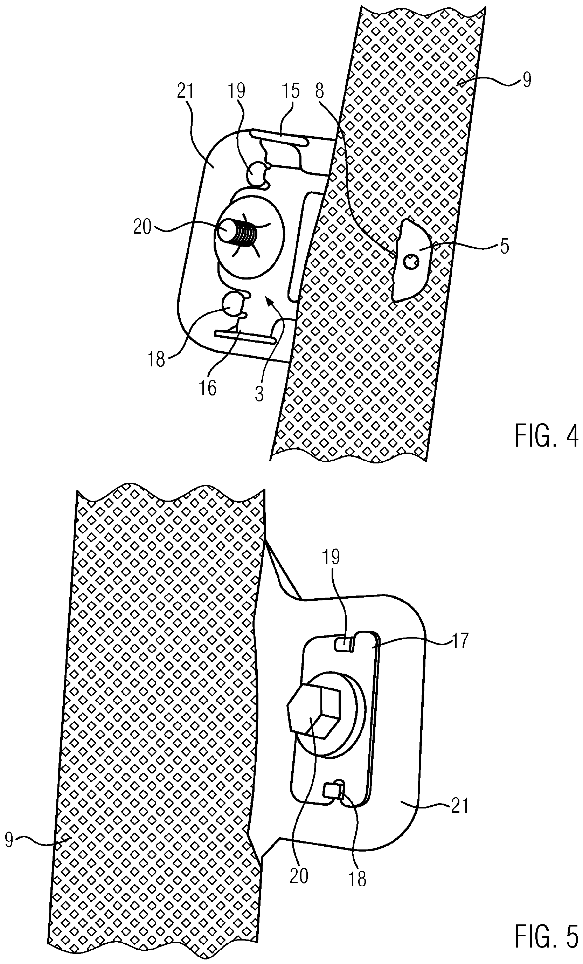

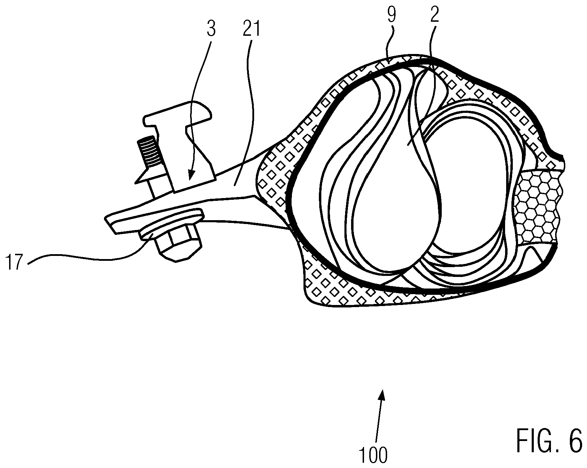

In den Figuren 4 bis 6 ist eine Befestigungsanordnung mit der vorbeschriebenen ersten Befestigungsplatte 3 und mit zumindest einer zweiten Befestigungsplatte 17 als korrespondierende Gegenplatte beispielhaft dargestellt. Zwischen der ersten Befestigungsplatte 3 und der zweiten Befestigungsplatte 17 ist die Haltelasche 1 des in dem Montageschlauch aufgerollten Gassackes 2 gehalten. Dies wird insbesondere aus der Seitenansicht gemäß Figur 6 deutlich.

Die erste Befestigungsplatte 3 und die zweite Befestigungsplatte 17 werden über Haltearme 18, 19 zur Vormontage aneinander befestigt. Die Haltearme 18, 19 sind an der ersten Befestigungsplatte 3 derart angeordnet, dass die Haltearme 18, 19 etwa senkrecht von der ersten Befestigungsplatte 3 in Richtung der zweiten Befestigungsplatte 17 abstehen, welches insbesondere auch aus Figur 3 ersichtlich ist. Zur Vormontage greifen die Haltearme 18, 19 in korrespondierende Fixierausnehmungen der zweiten Befestigungsplatte 17 ein und werden anschließend entsprechend umgebogen.

Zur fahrzeugseitigen Montage des den Gassack 2 aufnehmenden Montageschlauches 9 weist die Befestigungsanordnung eine gemeinsame Verschraubung 20 auf, mit der die zwischen der ersten Befestigungsplatte 3 und der zweiten Befestigungsplatte 17 gehaltene Haltelasche 1 an der Fahrzeugkarosserie vorzugsweise oberhalb eines Seitenfensterbereiches des Fahrzeuges befestigt wird.

Die Figuren 4, 5 und 6 stellen die Befestigungsanordnung mit dem in dem Montageschlauch 9 aufgerollten Gassack 2 in verschiedenen Ansichten dar, wobei das Gassackmodul neben der Befestigungsanordnung einen Gasgenerator zum Bereitstellen von Aufblasgas für den Gassack 2 umfasst und ein Teil des Fahrzeuginsassenrückhaltesystems darstellt.

### Bezugszeichenliste

- 1: Befestigungselement
- 2: Gassack
- 3: (erste) Befestigungsplatte
- 4: Fortsatz
- 5: Endabschnitt
- 6: Hinterschnitt
- 7: Hinterschnitt
- 8: Ausnehmung des Montageschlauches
- 9: Montageschlauch
- 10: Längsachse bzw. Längserstreckung
- 11: Armabschnitt
- 12: Armabschnitt
- 13: gewichtsreduzierende Aussparung
- 14: Verschraubungsbohrung
- 15: Haltekralle
- 16: Haltekralle
- 17: zweite Befestigungsplatte
- 18: Haltearm
- 19: Haltearm
- 20: Verschraubung
- 21: Haltelasche
- 100: Gassackmodul

## Patentansprüche

1. Befestigungselement zur fahrzeugseitigen Montage eines Gassackmoduls (100), mit zumindest einer fahrzeugseitig befestigbaren Befestigungsplatte (3), die in ihrer Plattenebene (E) verdrehsicher mit einem Gassack (2) koppelbar ist, wobei die Befestigungsplatte (3) einen Fortsatz (4) aufweist, **dadurch gekennzeichnet, dass** der Fortsatz (4) zumindest einen Hinterschnitt (6, 7) aufweist, welcher an einer Ausnehmung (8) des Gassackes (2) oder eines Halteelementes (9) fixierbar ist, sodass das Befestigungselement (1) senkrecht zu der Plattenebene (E) verdrehsicher an dem Gassack (2) oder an dem, diesen in seiner Faltung bewahrenden Halteelement (9) fixierbar ist.

2. Befestigungselement nach Anspruch 1, **dadurch gekennzeichnet, dass** der Fortsatz (4) zwei symmetrisch zu einer Längsachse (10) der Befestigungsplatte (3) ausgerichtete Armabschnitte (11, 12) umfasst, die in einem gemeinsamen Endabschnitt (5) des Fortsatzes (4) münden.

3. Befestigungselement nach Anspruch 2, **dadurch gekennzeichnet, dass** der Endabschnitt (5), insbesondere halbkreisförmig, mit beidseitig zur Längsachse (10) symmetrisch vorgesehenen Hinterschnitten (6, 7) als Halteanker ausgeführt ist.

4. Befestigungselement nach Anspruch 2 oder 3, **dadurch gekennzeichnet, dass** der Fortsatz (4) zwischen den Armabschnitten (11, 12) eine gewichtsreduzierende Aussparung (13) aufweist.

5. Befestigungselement nach einem der vorangehenden Ansprüche, **dadurch gekennzeichnet, dass** die Befestigungsplatte (3) eine zentrale Öffnung (14), insbesondere eine Verschraubungsbohrung oder eine Clipaufnahmeöffnung, zur fahrzeugseitigen Befestigung aufweist, wobei vorzugsweise beidseitig neben der zentralen Öffnung (14) quer zur Längsachse (10) der Befestigungsplatte (3), weiter vorzugsweise jeweils etwa senkrecht zur Plattenebene (E) ausgerichtete, Haltekrallen (15, 16) zur fahrzeugseitigen Befestigung angeformt sind.

6. Befestigungselement nach einem der vorangehenden Ansprüche, **dadurch gekennzeichnet, dass** der Gassack (2) als Seitenairbag, insbesondere als Vorhangairbag ausgebildet ist.

7. Gassackmodul mit einem Gassack (2), einem Gasgenerator zum Bereitstellen von Aufblasgas für den Gassack (2) und zumindest einem Befestigungselement (1) nach zumindest einem der vorangehenden Ansprüche.

8. Gassackmodul nach Anspruch 7, **dadurch gekennzeichnet, dass** zwischen der Befestigungsplatte (3) des Befestigungselementes (1) und einer zu dieser korrespondierenden Gegenplatte (17) eine Haltelasche (21) des Gassackes (2) gehalten ist, und wobei die erste Befestigungsplatte (3) und die zweite Befestigungsplatte (17), vorzugsweise über Haltearme (18, 19) aneinander gekoppelt sind.

9. Fahrzeuginsassenrückhaltesystem mit einem Gassackmodul (100) nach Anspruch 7 oder 8 sowie mit zumindest einer Sensoreinheit zum Erfassen von Umständen, die einen Aktivierungsfall des Gasgenerators auslösen, und mit einer elektronischen Recheneinheit zum Definieren des Aktivierungsfalles auf Basis der von der Sensoreinheit erfassten Umstände.

## Claims

1. A mounting element for vehicle-side assembly of an airbag module (100) comprising at least one mounting plate (3) adapted to be mounted on the vehicle side which in its plate plane (E) can be non-rotatably coupled to an airbag (2), wherein the mounting plate (3) includes an extension (4), **characterized in that** the extension (4) has at least one undercut (6, 7) which can be fixed to a recess (8) of the airbag (2) or of a retaining element (9), so that the mounting element (1) can be fixed perpendicularly to the plate plane (E) non-rotatably to the airbag (2) or to the retaining element (9) maintaining the latter in its folded state.

2. The mounting element according to claim 1, **characterized in that** the extension (4) comprises two arm portions (11, 12) which are aligned symmetrically to a longitudinal axis (10) of the mounting plate (3) which end in a joint end portion (5) of the extension (4).

3. The mounting element according to claim 2, **characterized in that** the end portion (5) is in the form, especially semi-circularly, of a retaining anchor, with undercuts (6, 7) provided symmetrically on both sides of the longitudinal axis (10).

4. The mounting element according to claim 2 or 3, **characterized in that** the extension (4) includes a weight-reducing cut-out (13) between the arm portions (11, 12).

5. The mounting element according to any one of the preceding claims, **characterized in that** the mounting plate (3) has a central opening (14), especially a screwing bore or a clip receiving hole, for vehicle-side mounting, wherein retaining claws (15, 16) aligned preferably on both sides next to the central opening (14) transversely to the longitudinal axis (10) of the mounting plate (3), further preferably approximately perpendicularly to the plate plane (E), are formed integrally for vehicle-side mounting.

6. The mounting element according to any one of the preceding claims, **characterized in that** the airbag (2) is a side airbag, especially a curtain airbag.

7. An airbag module comprising an airbag (2), an inflator for providing inflating gas for the airbag (2) and at least one mounting element (1) according to at least one of the preceding claims.

8. The airbag module according to claim 7, **characterized in that** a retaining tab (21) of the airbag (2) is held between the mounting plate (3) of the mounting element (1) and a counter-plate (17) corresponding thereto, and wherein the first mounting plate (3) and the second mounting plate (17) are coupled to each other, preferably via retaining arms (18, 19).

9. A vehicle occupant restraining system comprising an airbag module (100) according to claim 7 or 8 as well as at least one sensor unit for detecting circumstances which trigger a case of activation of the inflator and comprising an electronic computing unit for defining the case of activation based on the circumstances detected by the sensor unit.

## Revendications

1. Elément de fixation pour le montage sur le côté d'un véhicule d'un module airbag (100), comprenant au moins une plaque de fixation (3) pouvant être fixée sur le côté d'un véhicule et pouvant être couplée de manière solidaire en rotation dans son plan de plaque (E) à un coussin gonflable (2), pour lequel la plaque de fixation (3) présente un prolongement (4), **caractérisé en ce que** le prolongement (4) présente au moins une sous-découpe (6, 7), laquelle peut être fixée à un évidement (8) du sac gonflable (2) ou d'un élément de retenue (9), de sorte que l'élément de fixation (1) peut être fixé perpendiculairement au plan de la plaque (E) en rotation au sac gonflable (2) ou à l'élément de retenue (9) qui maintient ce dernier dans son pliage.

2. Elément de fixation selon la revendication 1, **caractérisé en ce que** le prolongement (4) comprend deux sections de bras (11, 12) qui sont alignées symétriquement par rapport à un axe longitudinal (10) de la plaque de fixation (3) et débouchent dans une section d'extrémité commune (5) du prolongement (4).

3. Elément de fixation selon la revendication 2, **caractérisé en ce que** la section d'extrémité (5) est conçue comme un ancrage de retenue, en particulier en forme de demi-cercle, avec des sous-découpes (6, 7) prévues symétriquement de part et d'autre de l'axe longitudinal (10).

4. Elément de fixation selon la revendication 2 ou 3, **caractérisé en ce que** le prolongement (4) présente un évidement (13) pour réduire le poids entre les sections de bras (11, 12).

5. Elément de fixation selon l'une des revendications précédentes, **caractérisé en ce que** la plaque de fixation (3) présente une ouverture centrale (14), en particulier un trou de vis ou une ouverture de réception de clip, pour la fixation sur le côté d'un véhicule, pour lequel des griffes de retenue (15, 16) pour la fixation sur le côté d'un véhicule sont formées de préférence des deux côtés à côté de l'ouverture centrale (14) transversalement à l'axe longitudinal (10) de la plaque de fixation (3), de préférence également orientées à peu près perpendiculairement au plan de la plaque (E).

6. Elément de fixation selon l'une des revendications précédentes, **caractérisé en ce que** le coussin gonflable (2) est conçu comme un module airbag latéral, en particulier comme un module airbag rideau.

7. Module airbag comportant un sac gonflable (2), un générateur de gaz pour fournir du gaz de gonflage pour le sac gonflable (2) et au moins un élément de fixation (1) selon au moins une des revendications précédentes.

8. Module airbag selon la revendication 7, **caractérisé en ce qu'**entre la plaque de fixation (3) de l'élément de fixation (1) et une contre-plaque (17) correspondante est maintenue une plaque de retenue (21) du coussin gonflable (2), et pour lequel la première plaque de fixation (3) et la deuxième plaque de fixation (17) sont couplées l'une à l'autre, de préférence par des bras de retenue (18, 19).

9. Système de retenue des occupants d'un véhicule avec un module airbag (100) selon la revendication 7 ou 8 et avec au moins une unité de détection pour détecter les circonstances qui déclenchent un cas d'activation du générateur de gaz et avec une unité de calcul électronique pour définir le cas d'activation sur la base des circonstances détectées par l'unité de détection.
